# EUROPÄISCHE PATENTSCHRIFT

(11) **EP 1 630 073 B1**
(45) Veröffentlichungstag und Bekanntmachung des Hinweises auf die Patenterteilung: **14.11.2007**
(21) Anmeldenummer: 05016474.8
(22) Anmeldetag: 29.07.2005
(51) Int. Cl.: B62D 21/11, B62D 7/00

(54) **Vorrichtung zum Befestigen eines getragenen Bauteils an einem tragenden Bauteil einer Kraftfahrzeug-Karosserie**
Apparatus for fixing a carried component to a carrying component in a vehicle bodywork
Dispositif pour fixer un composant porté à un composant portant dans une carrosserie d'un véhicule

(30) Priorität: 26.11.2004 DE 102004057176; 27.08.2004 DE 102004041483
(43) Veröffentlichungstag der Anmeldung: 01.03.2006
(73) Patentinhaber: AUDI AG, 85045 Ingolstadt (DE)
(72) Erfinder: Michel, Wilfried, 93339 Riedenburg (DE)

(56) Entgegenhaltungen:
- EP-A- 0 321 433
- EP-A- 1 386 821
- DE-A1- 3 718 841
- JP-U- 2 085 667
- US-A- 5 613 709

## Beschreibung

Die Erfindung betrifft einen Hilfsrahmen für eine Vorderachse eines Personenkraftwagens zur Lagerung eines Lenkgetriebes gemäß der im Oberbegriff des Anspruchs 1 angegebenen Art.

Beim Bau einer Karosserie für ein Kraftfahrzeug bedarf es insbesondere dann einer genauen Positionierung zugehöriger Bauteile, wenn es sich um tragende Bauteile für das Fahrwerk und der Lenkung handelt. Bereits geringe Abweichungen solcher Bauteile von einer Sollposition kann die Fahr- und Lenkeigenschaften wesentlich beeinträchtigen.

Es ist im Karosseriebau für Kraftfahrzeuge bekannt, ein Lenkgehäuse eines Lenkgetriebes durch zum Beispiel drei Schrauben direkt an der Karosserie eines Kraftfahrzeugs, oder an einen Hilfsrahmen anzuschrauben, der mit der Karosserie verbunden ist. Dabei durchfassen die Schrauben das Lenkgehäuse in sich durch Befestigungsnocken des Lenkgehäuses erstreckenden Löchern, und sie sind mit der Karosserie verschraubt. Bei einer solchen Befestigung erfüllen die Schrauben die gesamte Befestigungsfunktion, wobei sie die erforderlichen Zugspannungen, Abscherspannungen und Biege- bzw. Kippspannungen aufnehmen müssen. Bei dieser vorbekannten Befestigungsvorrichtung sind folglich die Schrauben großen Belastungen ausgesetzt.

Bei einer anderen, eingangs angegebenen, vorbekannten Vorrichtung zum Befestigen eines Lenkgehäuses mittelbar oder unmittelbar an der Karosserie sind auf beiden Seiten einer vertikalen Längsmittelebene der Karosserie zwei Tragstege vorgesehen, die einen Abstand voneinander aufweisen, wobei das Lenkgehäuse zwischen den Tragstegen angeordnet ist und daran durch Schrauben festgeschraubt ist, die durch die Tragstege und das Lenkgehäuse in Löchern durchfassen und eine feste Verbindung auf jeder Seite der Karosserie bzw. des Kraftfahrzeugs gewährleisten sollen. Bei dieser vorbekannten Vorrichtung ist die Position des Lenkgehäuses in den beiden sich beiderseits der vorhandenen vertikalen Längsmittelebene befindlichen Vorrichtungen nicht definiert. Dies ist dadurch bedingt, dass beim Festschrauben unbestimmt ist, welcher der jeweils zugehörigen Tragstege sich um das vorhandene Bewegungsspiel bewegt. Es können sich somit unterschiedliche Positionen für das Lenkgehäuse bzw. Lenkgetriebe im verschraubten Zustand ergeben.

Außerdem ist diese vorbekannte Vorrichtung insbesondere dann raum-ungünstig, wenn das Lenkgetriebe horizontal neben einem Fahrwerksquerträger positioniert ist und die Verschraubung mit sich senkrecht erstreckenden Schrauben erfolgt. Hierbei ist vor oder hinter den freien Enden der Tragstege ein Freiraum für die Montage bzw. für die Demontage erforderlich, um das Lenkgehäuse zunächst in den Freiraum und dann zwischen die Tragstege bewegen zu können.

Hieraus resultiert eine unbestimmte Position der Lenkung zur Radführung.

In der DE 197 30 404 B, die den Oberbegriff des Anspruchs 1 bildet, ist ein Hilfsrahmen für Kraftfahrzeuge, insbesondere für Vorderachsen von Personenkraftwagen, offenbart, der in Fahrzeuglängsrichtung verlaufende Seitenteile umfasst, die durch in Fahrzeugquerrichtung verlaufende obere und untere Querelemente zu einem Kastenprofil verbunden sind, das in Längsrichtung unter crashbedingten Längskräften verformbar ist und als Montageeinheit machbar ist.

Der Erfindung liegt die Aufgabe zugrunde, einen Hilfsrahmen der eingangs angegebenen Art bei Vermeidung der genannten Nachteile so zu gestalten, dass die Genauigkeit der Positionierung des Lenkgetriebes verbessert ist. Ferner soll eine raumgünstige Konstruktion erreicht werden, die sich vorteilhaft am Fahrwerk integrieren lässt und eine einfache Montage bzw. Demontage ermöglicht.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass sich dann eine genaue Positionierung des Lenkgetriebes ergibt, wenn einer der beiden Tragstege seine Position beim Festschrauben nicht verändert.

Bei dem erfindungsgemäßen Hilfsrahmen ist einer der beiden Tragstege bezüglich einer Biegung in der Richtung auf den anderen Tragsteg weniger stabil als der andere Tragsteg ausgebildet und durch die Spannkraft der Schraube gegen den anderen Tragsteg biegbar. Hierdurch ist beim Spannen der Schraube eine unveränderliche Position des anderen Tragstegs gewährleistet, wobei die Verschraubung selbst unbeeinträchtigt bleibt, weil die Nachgiebigkeit des einen Tragstegs im Rahmen des Bewegungsspiels zwischen den Tragstegen zu keiner Benachteiligung der Verschraubung führt. Dabei ist es vorteilhaft, den einen Tragsteg so elastisch biegbar auszubilden, dass seine Biegung beim Verschrauben im elastischen Biegebereich liegt. Hierdurch ist eine selbsttätige Rückbiegung gewährleistet, wobei auch das Bewegungsspiel sich wieder einstellt und eine erneute Montage möglich ist.

Außerdem ist die wenigstens eine Schraube durch die in einem Abstand voneinander angeordneten Tragstege in beiden Endbereichen abgestützt, wodurch die Belastungen auf die Schraube wesentlich reduziert sind.

Die erfindungsgemäße Ausgestaltung erfüllt die Forderung nach genauer Positionierung des getragenen Bauteils, und sie eignet sich vorzüglich zum Befestigen von Fahrwerksbauteilen oder Lenkungsbauteilen von Kraftfahrzeugen, insbesondere zum Befestigen eines Lenkgetriebes an einem Hilfsrahmen bzw. Fahrschemel.

Es ergeben sich raumgünstige bzw. niedrige Konstruktionen, wenn die Tragstege von den Längsträgern aufeinander zu- und/oder nach unten abstehen. Dabei lassen sich die Tragstege als tragende Bauteile in die Konstruktion einbeziehen, wobei sich eine günstige und vorteilhaft integrierbare Konstruktion dann ergibt, wenn der weniger stabile Tragsteg hinter dem anderen Tragsteg angeordnet ist.

Es lässt sich eine große Stabilität der Tragstege erreichen, wenn sie eine Höhenabmessung aufweisen, die größer ist als ihre in die Längsrichtung der Karosserie gerichtete Abmessung oder durch ein Profil, insbesondere ein Hohlprofil, vorzugsweise ein Rohrprofil, gebildet sind. Dies gilt für den weniger stabilen Tragsteg, wenn er durch eine sich etwa vertikal erstreckende Platte oder ein Blech gebildet ist.

Eine andere Forderung bezüglich der tragenden Konstruktion einer Kraftfahrzeug-Karosserie ist eine stabile Ausgestaltung und eine einfache und bequeme Montage bzw. Demontage.

Gemäß einer Ausführungsform der Erfindung ist auf einer Seite des Lenkgehäuses ein sich zwischen den Längsträgern erstreckender Tragsteg lösbar angeordnet, durch dessen Endbereiche und durch das Lenkgehäuse sich die Schrauben erstrecken. Durch den lösbaren Tragsteg sind nicht nur die Schrauben mittelbar aneinander abgestützt und stabilisiert, sondern es ist auch das Lenkgehäuse stabilisiert. Diese Ausführungsform zeichnet sich nicht nur durch eine einfache Konstruktion aus, sondern sie lässt sich auch in einfacher Weise und handhabungsfreundlich montieren und demontieren.

Auch diese erfindungsgemäße Ausgestaltung erfüllt die Forderung nach genauer Positionierung des Lenkgetriebes, da sich der lösbare Tragsteg an den wenigstens einen anderen Tragsteg anpasst und letzterer die angestrebte genaue Positionierung gewährleistet.

Es ergibt sich eine raumgünstige Anordnung, wenn die Tragstege vertikal angeordnet sind und die Schrauben die Tragstege und das Lenkgehäuse horizontal durchfassen. Dabei kann auf der anderen Seite des Lenkgehäuses ein sich von dem einen Längsträger zum anderen Längsträger erstreckender und daran unlösbar befestigter Tragsteg angeordnet ist.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben. In der Beschreibung, in den Patentansprüchen, in der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: eine Draufsicht auf einen Hilfsrahmen, der einen Teil einer Karosserie für ein Kraftfahrzeug, insbesondere für einen Personenkraftwagen, bildet;
- Fig. 2: einen linken Teil des Hilfsrahmens in der Ansicht von unten;
- Fig. 3: eine Teil-Rückansicht des Hilfsrahmens in der Blickrichtung des Pfeils X in Fig. 2;
- Fig. 4: den Teilschnitt IV - IV in Fig. 1;
- Fig. 5: eine Draufsicht auf einen Hilfsrahmen in abgewandelter Ausgestaltung;
- Fig. 6: den Teilschnitt VI - VI in Fig. 5;
- Fig. 7: den Teilschnitt VII - VII in Fig. 5;
- Fig. 8: den Teilschnitt VIII - VIII in Fig. 5;
- Fig. 9: eine Draufsicht auf einen Hilfsrahmen in weiter abgewandelter Ausgestaltung;
- Fig. 10: den Teilschnitt X - X in Fig. 9;
- Fig. 11: eine Draufsicht auf einen Hilfsrahmen in weiter abgewandelter Ausgestaltung;
- Fig. 12: den Hilfsrahmen nach Fig. 11 in der Rückansicht
- Fig. 13: andere Ausgestaltungsform des vorderen Querträgers 22
- Fig. 14: hutförmige Ausgestaltungsform des vorderen Querträgers 22
- Fig. 15: Auffahrschutz für Lenkgetriebe

Der in seiner Gesamtheit mit 10 bezeichnete Hilfsrahmen ist ein Teil der Karosserie des Kraftfahrzeugs, insbesondere des Personenwagens, wobei der Hilfsrahmen 10 ein in seiner Gesamtheit mit 12 bezeichnetes Lenkgetriebe und auf jeder Seite zwei vordere und hintere Gelenkteile 16a, 16b für andeutungsweise dargestellte seitlich abstehende Querlenker 18 aufweist.

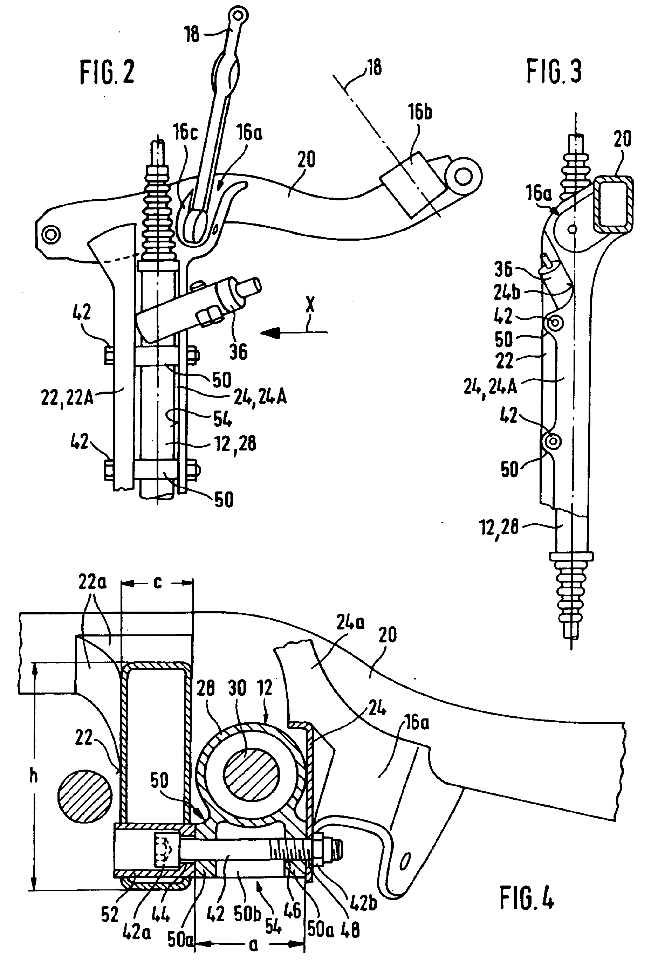

Der Hilfsrahmen 10 besteht aus zwei einen Querabstand voneinander aufweisenden und sich Längs der Längsrichtung 14 erstreckenden Längsträgern 20, die beim vorliegenden Ausführungsbeispiel in der horizontalen Ebene leicht S-förmigen gekrümmt sind und in ihrem vorderen Bereich durch zwei einen längs gerichteten Abstand voneinander aufweisende Querträgern, nämlich einen vorderen Querträger 22 und einen hinteren Querträger 24, miteinander verbunden sind, siehe auch Fig.4. Die Querträger 22, 24 bilden einen vorderen Tragsteg 22A und einen hinteren Tragsteg 24A.

In der Draufsicht weist der Hilfsrahmen 10 somit eine H-förmige Form auf. An den vorderen und hinteren Enden der Längsträgern 20 sind Befestigungselemente 26a, 26b zum befestigen des Hilfsrahmens 10 an der im weiteren nicht dargestellten Karosserie vorgesehen, die zum Beispiel durch sich vertikal erstreckende Schraubenlöcher in Verstärkungsbuchsen gebildet sein können.

Das Lenkgetriebe 12 weist ein an sich bekanntes rohrförmiges Lenkgehäuse 28 auf, das sich quer zur Längsrichtung 14 erstreckt, und in dem eine Schubstange 30 in ihrer Längsrichtung hin und her verschiebbar gelagert ist, die beim vorhanden sein einer Servolenkung durch eine Kolbenstange gebildet ist. Der Hilfsrahmen 10 ist ein tragendes Bauteil 10A, das das Lenkgehäuse 28 als getragenes Bauteil 28A trägt. Das Lenkgetriebe 12 ist vorzugsweise tiefer angeordnet als die Längsträger 20, so dass die Schubstange 30 sich unter den Längsträgern 20 erstrecken kann.

Zum Verschieben der Schubstange 30 ist ein angedeuteter Zahnstangentrieb 32 mit einer Längszahnung an der Schubstange 30 und einem Ritzel, das mit einem unterem Lenkwellenabschnitt 34 drehbar in einem rohrförmigen Ansatzgehäuse 36 mit hydraulischen Anschlüssen 36a drehbar gelagert ist, das starr mit dem Lenkgehäuse 28 verbunden und von diesem getragen ist. Das der Schubstange 30 abgewandte Ende des Lenkwellenabschnitts 34 lässt sich in nicht dargestellter Weise durch wenigstens einen weiteren Lenkwellenabschnitt mit dem Lenkrad des Kraftfahrzeugs verbinden wie es üblich ist. Durch ein an sich bekanntes Lenkventil, das z.B. im Bereich des Ansatzgehäuses 36 angeordnet und andeutungsweise mit 38 bezeichnet ist, dient zur Steuerung der hydraulischen Beaufschlagung der als Kolbenstange ausgebildeten Schubstange 30 im Bereich des als hydraulische Zylinder ausgebildeten Lenkgehäuses 28. Zugehörige hydraulische Leitungen sind aus Vereinfachungsgründen nicht näher bezeichnet. Die das Lenkgehäuse 28 überragenden Endabschnitte der Schubstange 30, die in nicht dargestellter Weise mit Lenkern der Lenkung verbunden sind, sind durch Schutzmanschetten 40 im Bereich ihres Austritts aus dem Lenkgehäuse 28 geschützt.

Das Lenkgehäuse 28 ist zwischen den Querträgern 22, 24 angeordnet, wobei letztere einen vorzugsweise in der Längsrichtung 14 gerichteten Abstand voneinander aufweisen, der um ein kleines Bewegungsspiel größer ist, als die zugehörige Abmessung des Lenkgehäuses 28, so dass letzteres mit Bewegungsspiel zwischen die Querträgern 22, 24 einschiebbar ist. Zur Befestigung des Lenkgehäuses 28 an den Querträgern 22, 24 sind zwei einen quer zur Längsrichtung 14 gerichteten Abstand voneinander aufweisende Schrauben 42 vorgesehen, die die Querträgern 22, 24 und das Lenkgehäuse 28 jeweils in einem Schraubenloch 44, 46, 48 durchfassen. Das Schraubenloch 46 im Lenkgehäuse 28 ist bezüglich dessen Längsmittelachse 28a so radial versetzt, dass es bezüglich der kreisrunden Umfangswand des Lenkgehäuses 28 etwa tangential verläuft oder einen radialen Abstand davon aufweist. Das Schraubenloch 46 befindet sich jeweils in einem Befestigungsnocken 50, der einteilig an die Umfangswand des Lenkgehäuses 28 angeformt ist oder daran als separates Bauteil befestigt ist, zum Beispiel durch Schweißen. Die sich in der Längsrichtung des Schraubenloches 46 erstreckende Abmessung a ist vorzugsweise größer als der Außendurchmesser des Lenkgehäuses 28, wodurch für letzteres beidseitige noch zu beschreibende Freiräume gebildet werden. Der sich in der Längsrichtung des Lenkgehäuses 28 erstreckende Abstand b der Schraubenlöcher 46 voneinander ist so groß, dass die Schraubenlöcher 46 sich in den Endbereichen der Querträgern 22, 24 befinden. Neben oder zwischen den Befestigungsnocken 50 ist an der Unterseite des Lenkergehäuses 28 Raum für das Ansatzgehäuse 36 vorhanden.

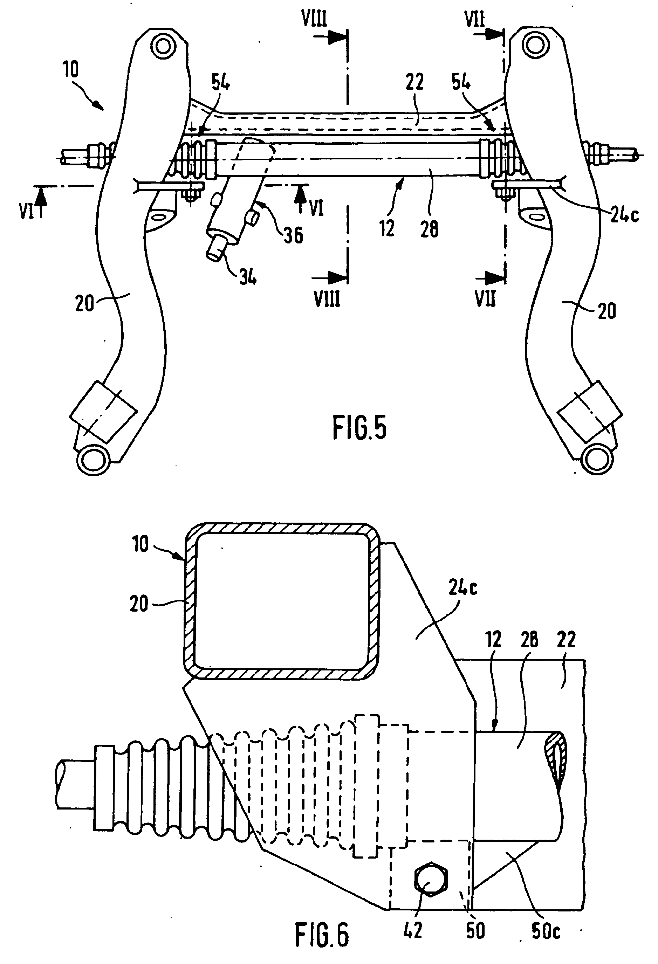

Um Material und Gewicht zu sparen, können die Befestigungsnocken 50 durch zwei sekantial oder tangential vom runden Lenkgehäuse 28 ausgehende Nockenwände 50a gebildet sein, zwischen denen ein Freiraum 50b angeordnet ist, der zur Material- und Gewichtsersparnis beiträgt. Der Befestigungsnocken 50 kann auch durch dein Knotenblech 50c stabilisiert sein, wie es Fig. 6 zeigt.

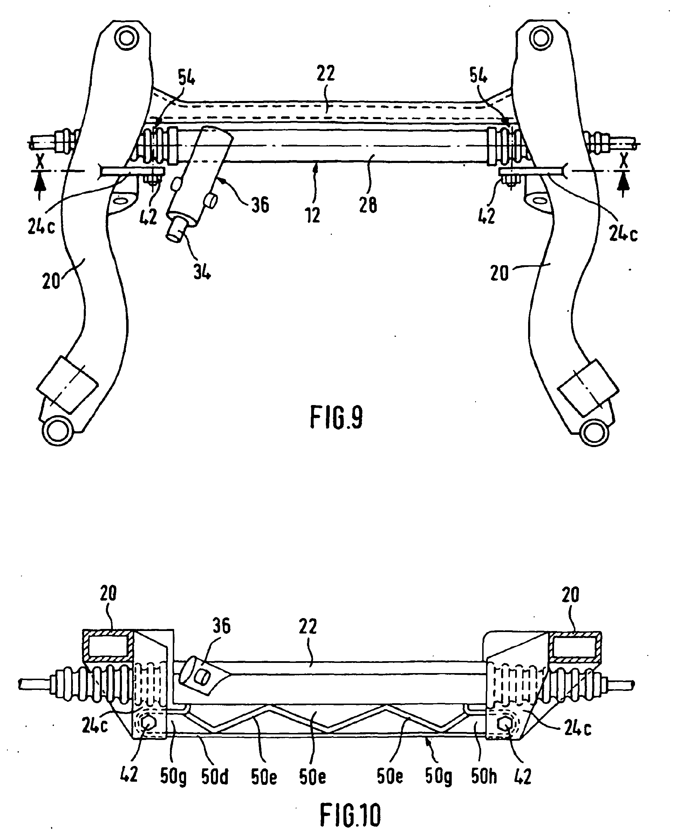

Im Rahmen der Erfindung können sich der Befestigungsnocken 50 bzw. die Nockenwände 50a im Bereich zwischen den beiden Schraubenlöchern 46 durchgehen erstrecken, wobei z.B. auch der Freiraum 50b sich in der Längsrichtung des Lenkgehäuses 28 durchgehen erstrecken kann oder auch durch Querwände stabilisiert sein kann. Hierdurch ist das Lenkgehäuse 28 wesentlich stabilisiert, wobei es in der den Befestigungsnocken 50 schneidenden Ebene ein größeres Widerstandsmoment erhält. Letzteres lässt sich durch eine fachwerkförmige Konstruktion mit einem Untergurt 50d und ebenfalls auch dazwischen angeordneten, z.B. zickzackförmigen Streben 50e weiter verstärken, wie es z.B. Fig. 10zeigt. Diese Verstärkung eignet sich sowohl für beide Querträger 22, 24 als auch für nur einen Querträger 24. Es kann auch ein Steg 50f vom Lenkgehäuse 28 nach unten abstehen, z.B. bis zum vorzugsweise vorhandenen Untergurt 50d. Hierdurch ist ein sich längs des Lenkgehäuses 28 erstreckender Verstärkungssteg 50g gebildet.

Einer der beiden Querträger 22, 24, z.B. der hintere Querträger 24 oder beim Ausführungsbeispiel der vordere Querträger 22 ist stabiler ausgebildet als der andere Querträger. Der stabilisiertere Querträger 22 weist deshalb in der Längsrichtung des Schraubenloches 44 ein größeres Widerstandsmoment auf als der andere Querträger 24. Beim vorliegenden Ausführungsbeispiel ist somit der hintere Querträger 24 weniger stabil als der vordere Querträger 22, und er weist auch in der Längsrichtung der Schraubenlöcher 44 bzw. der Schrauben 42 ein geringeres Widerstandsmoment auf als der vordere Querträger 22. Beim Festziehen der Schrauben 42 wird deshalb die weniger stabile Querträger 24 im Rahmen des Bewegungsspiels mit dem Befestigungsnocken 50 gegen den stabilisierte Querträger 22 bewegt und gegen diesen festgezogen. Der stabilisierte Querträger 22 bildet somit ein immer in gleicher Position befindliches Festlager zur Befestigung des Lenkgehäuses 28. Die stabilisierte Konstruktion kann z.B. durch eine größere Wandstärke oder eine doppelte Wand an dem stabilisierten Querträger 22 erreicht werden. Vorzugsweise ist der Querträger durch ein Hohlprofil, z.B. ein Vierkantrohr, gebildet, dessen Höhe h vorzugsweise größer ist als seine Breite c.

Der weniger stabile Querträger 24 kann durch ein Winkelprofil gebildet sein, wie es Fig.4 zeigt, wobei der Querschenkel des Winkelprofils am dem Schraubenloch 48 abgewandten Rand des Querträgers 24 angeordnet ist. Der weniger stabile Querträger 24 kann jedoch auch aus einer Platte oder einem Blech gebildet sein. Der Querträger 24 ist deshalb in seiner horizontalen Querrichtung bzw. in der Längsrichtung des Schraubenlochs 48 nachgiebig, vorzugsweise elastisch nachgiebig.

Gemäß Fig. 4 ist der Hintergriff des Tragstegs 22 durch die Schraube 42 stabilisiert. Die Schraube 42 hintergreift mit ihrem Kopf 42a eine Schulterfläche an dem Querträger 22 und mit einer aufgeschraubten Mutter 42b den anderen Querträger 24. Der Schraubenkopf 42a ist vorzugsweise in einer Buchse 52 versenkt angeordnet, die in einem Loch 54 in der wenigstens einen vertikalen Wand des zugehörigen Querträgers 22 eingesetzt und befestigt ist, vorzugsweise durch Schweißen. Es kann vorteilhaft sein, die Länge der Buchse 52 größer zu bemessen als die Breite der Querträger 22, so dass die Buchse 52 vorzugsweise beidseitig übersteht. Nach einer weiteren Ausgestaltungsmöglichkeit muss der Schraubenkopf 42a nicht in der Buchse 52 versenkbar sein, sondern kann an der Planfläche der Buchse 52 anliegen.
Die Verschraubung kann auch anders ausgebildet sein, z.B. kann die Schraube 42 umgekehrt angeordnet sein, d.h. mit ihrem Kopf 42a den Querträger 24 hintergreifen und z.B. in ein Gewindeloch in der Buchse 52 eingeschraubt sein.

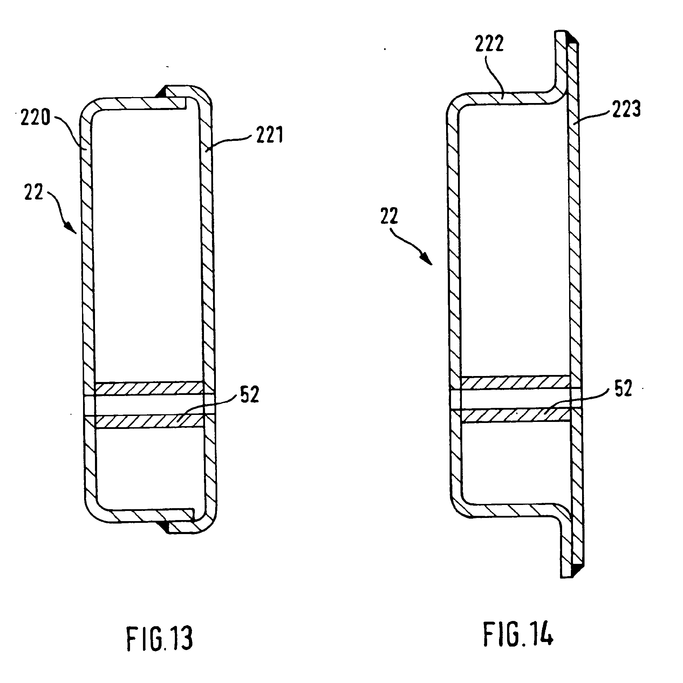

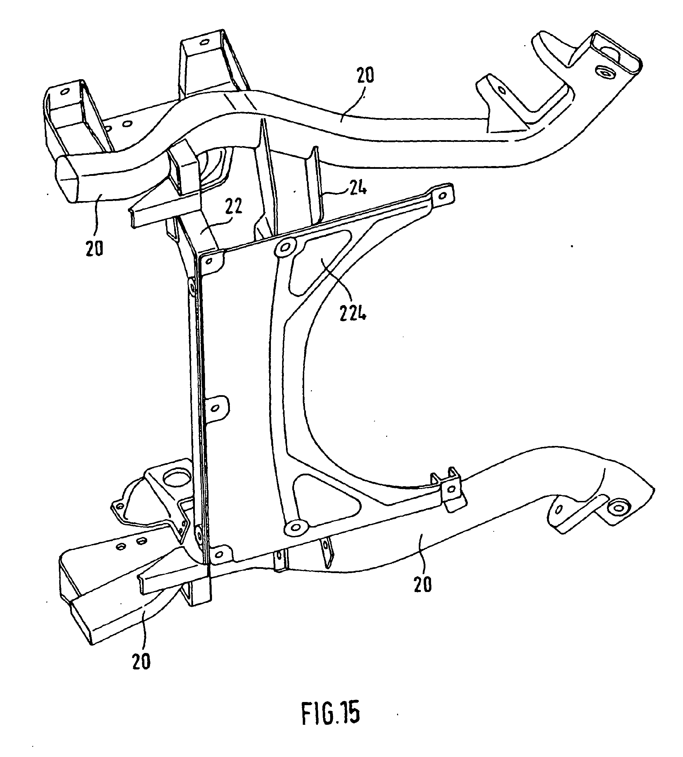

Im weiteren muss die Buchse 52 nicht gegenüber der Aussenfläche des Querträgers 22 überstehen, sondern kann sich eben in die Kontur der Aussenfläche des Querträgers 22 einfügen. In einem solchen Fall könnte der als Hohlprofil ausgebildete Querträger 22 zweiteilig ausgeführt sein.Der Querträger 22 wäre dann topfförmig aus dem Trägerelement 220 und 221 zusammengesetzt (Fig.13).Die Verbindung könnte beispielsweise geschweisst sein. Andere geeignete Verbindungen sind auch möglich. Die Buchse 52 ist mit ihrer Stirn eben in die Kontur der Innenwandung des ein Hohlprofil bildenden Querträgers 22 eingepasst.
Eine andere Möglichkeit (Fig.14)ist es, den Querträger 22 zweiteilig aus den Elementen 222 und 223 zu bilden.Diese hutförmige Anordnung der Bauteile ermöglicht ebenso wie die vorrangehende Ausgestaltung Vorteile bei der Fertigung.

Die Enden der Querträgern 22, 24 sind unlösbar mit den Längsträgern 20 verbunden, insbesondere durch Schweißen. Um die Stabilität zu vergrößern, weisen die Querträgern 22, 24 im Querschnitt erweiterte Endbereiche 22a, 24a auf, deren Ränder mit den Längsträgern 20 verbunden sind, vorzugsweise durch Schweißen.

Der beim Ausführungsbeispiel hintere Querträger 24 kann einteilig mit den ihm seitlich zugeordneten Gelenkteilen 16a, hier den vorderen Gelenkteilen 16a, an den Längsträgern 22 ausgebildet sein. Beim Ausführungsbeispiel weisen diese Gelenkteile groß U-förmige Gelenkklauen auf, wobei jeweils die benachbarte Seitenwand 16c der Gelenkklaue ein Endbereich des Querträgers 24 ist. Das Kombinationsbauteil Querträger/Gelenkklaue kann durch ein Stanz-/Biegeteil aus Blech gebildet sein. Dieses Kombinationsbauteil lässt sich am besten in den Fig. 2 und 4 erkennen.

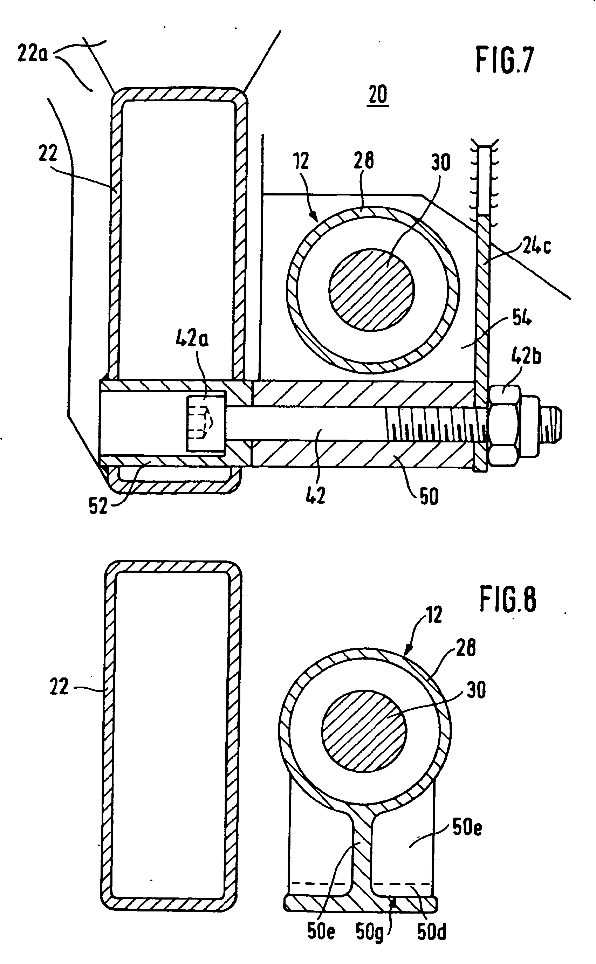

Wenn das Lenkgehäuse 28 z.B. gemäß dem Ausführungsbeispiel nach Fig. 8 und 10 z.B. durch einen Untergurt 50c stabilisiert ist, kann auf einen der beiden Querträger verzichtet werden z.B. auf den hinteren Querträger 24, wodurch Freiraum geschaffen wird.

Es ist aber auch unabhängig von einer vorbeschriebenen Stabilisierung durch einen Untergurt 50c bzw. einen Befestigungssteg 50d möglich, anstelle des fehlenden durchgehenden Querträgers 24 nur im Bereich der Längsträgern 20 vorhandene zwei Querträgerstücke 24c gemäß Fig. 7, 9 und 10 vorzusehen, die im übrigen wie der durchgehende hintere Querträger 24 ausgebildet sein können, z. B. in Form einer etwa vertikalen Wand bzw. Platte, die jeweils nur im Bereich der zugehörigen Schraube 42 angeordnet ist und mit dem zugehörigen Längsträger 20 unlösbar befestigt ist vorzugsweise durch Schweißen.
Die Querträger 24c können auch an einer Lenkerkonsole angeordnet sein, um die beschriebene Funktion zu erfüllen.
Im mittleren Bereich des Hilfsrahmens 10 ist kein hinterer Querträger 24 vorhanden, wie es Fig. 5, 9 und 10 deutlich zeigen.

Fig. 8 zeigt das durch einen Befestigungssteg 50g bzw. Untergurt 50d stabilisierte Lenkgehäuse 28 im Bereich zwischen den Querträgerstücken 24c.
In einer Ausführungsvariante kann der Ventildom in seiner ursprünglichen unteren Position am Lenkgehäuse 28 verbleiben.
In einer anderen Ausführungsvariante kann das Ansatzgehäuse 36 in der Umfangsrichtung versetzt, z.B. auf dem Lenkgehäuse 28, angeordnet sein, wie es Fig. 9 zeigt. Der Befestigungssteg 50g kann durch das Lenkgehäuse 28 überragende Brückenenden 50h bis zu den Schraubstellen verlängert sein, siehe Fig. 10.

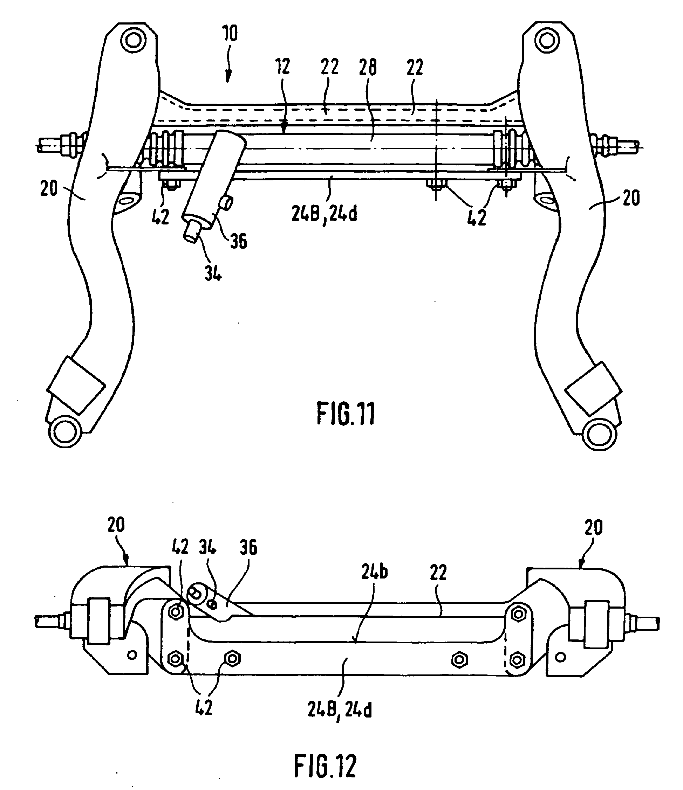

Es ist im Rahmen der Erfindung auch möglich, den weniger stabilen Querträger, hier den hinteren Querträger 24, nicht unlösbar mit den Längsträgern 20 zu verbinden sondern in den Endbereichen mit den Schrauben 42 zu verschrauben, wobei in jedem Endbereich mehrere Schrauben 42 vorgesehen sein können, z.B. jeweils drei Schrauben 42, die winkelförmig an den seitlichen und unteren Rändern der Endbereiche des Querträgers 24B bzw. Tragstegs angeordnet sein können. Es ist außerdem vorteilhaft, den hinteren Querträger 24, hier den angeschraubten Querträger 24B, in seiner Rückansicht mit einer langen Ausnehmung 24b U-förmig zu formen, so dass die hier oberseitige Ausnehmung 24b einen Freiraum schafft, z.B. für das Ansatzgehäuse 36 des Lenkventils 38 und/oder zugehörigen Anschlüssen oder Hydraulikleitungen, wie es Fig. 11 und 12 zeigen.

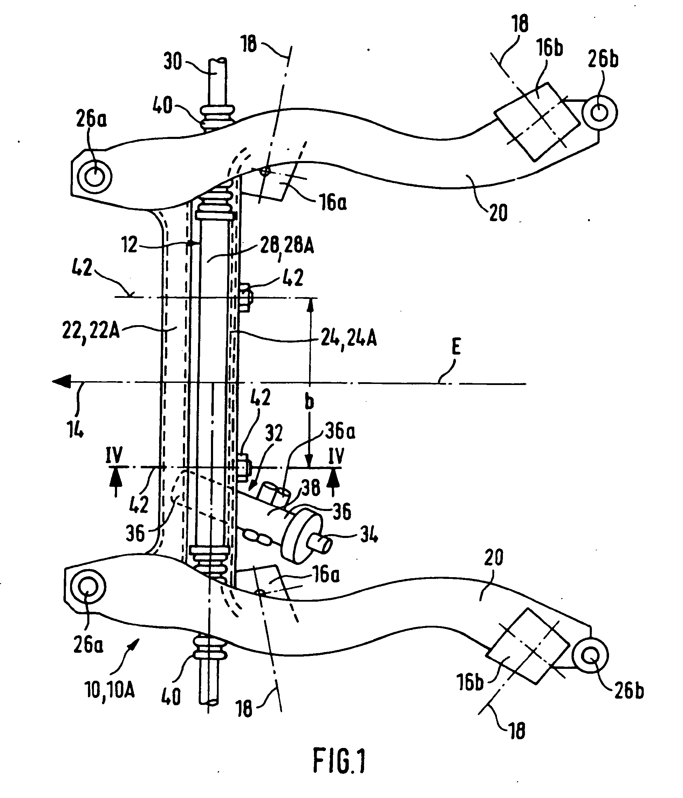

Bei den Ausführungsbeispielen nach Fig. 1 bis 10 bilden die Querträger 22, 24 bzw. Tragstege 22A, 24A oder 24c einen Aufnahmeraum 54, der quer zur Längsrichtung 14 für das Lenkgetriebe 12 zugänglich und montierbar bzw. demontierbar ist und dann, wenn das Lenkgetriebe 12 tiefer angeordnet ist als die Längsträger 20 und letztere untergreift, seitlich und insbesondere von unten zugänglich und montierbar bzw. demontierbar ist, wo Freiraum vorhanden ist. Es wird somit eine kleine Konstruktionsgröße und eine raumgünstige und stabilisierte Konstruktion erreicht, insbesondere für den Hilfsrahmen 10.

Die Vorteile gelten auch für das Ausführungsbeispiel nach Fig. 11 und 12, da der Querträger 24d bzw. Tragsteg 24B quer zur Längsrichtung 14 und auch von unten montierbar bzw. demontierbar ist. Gegebenenfalls kann er auch von vorne montiert bzw. demontiert werden.

Der in der Schraubachse nachgiebige Tragsteg 24A bzw. Querträger 24 oder 24c trägt trotz seiner axialen Nachgiebigkeit quer zur Schraubachse wesentlich zur Stabilisierung bei, da er in der Richtung quer zur Schraubachse stabil ist und die Schraube stützt und den Hilfsrahmen stabilisiert.

Die erfindungsgemäße Vorrichtung bzw. der erfindungsgemäße Hilfsrahmen 10 eignet sich insbesondere für eine lenkbare Vorderachse eines Personenkraftwagens.

Wie z.B. aus Fig. 4 ersichtlich , kann das Lenkgetriebe 12 mit seiner Unterseite am Unterboden, nahe an der zulässigen Bodengrenzkontur eines Fahrzeuges anordenbar sein. Sollte dies der Fall sein, kann im weiteren die Anordnung eines zusätzlichen Auffahrschutzes 224 (Fig. 15)vorgesehen werden. Fig.15 zeigt einen Auffahrschutz 224 in Ausgestaltung eines mit Sicken versteiften Schutzbleches, welches das Lenkgetriebe zusätzlich gegen Missbrauch (Aufsetzer) bei Geländefahrt schützt. Der Auffahrschutz sollte am Hilfsrahmen anschraubbar sein, um die Montage/Demontage des Lenkgetriebes zu ermöglichen. Die Verschraubung erfolgt im Beispiel gegenüber den Querträgern 22 und 24 sowie den beiden Längsträgern 20.
Der Auffahrschutz (als Schutzblech mit Eigensteifigkeit) versteift als sogenanntes "Schubfeld" den Hilfsrahmen selbst und versteift somit, da der Hilfsrahmen mit der Karosserie starr verschraubt ist, auch den Vorderwagenbereich der Karosserie.
Der Auffahrschutz kann die Eigenschwingform des Hilfsrahmens in güstiger Weise beeinflussen.

### BEZUGSZEICHENLISTE

- 10: Hilfsrahmen
- 10A: tragendes Bauteil
- 12: Lenkgetriebe
- 14: Längsrichtung
- 16a: Gelenkteile
- 16b: Gelenkteile
- 16c: Seitenwand
- 18: Querlenker
- 20: Längsträger
- 22: vorderer Querträger
- 22A: vorderer Tragsteg
- 22a: Endbereich
- 24: hinterer Querträger
- 24A: hinterer Tragsteg
- 24B: lösbarer Tragsteg
- 24a: Endbereich
- 24b: Ausnehmung
- 24c: Querträgerstück
- 24d: lösbarer Querträger
- 26a: Befestigungselemente
- 26b: Befestigungselemente
- 28: Lenkgehäuse
- 28A: getragenes Bauteil
- 30: Schubstange
- 32: Zahnstangentrieb
- 34: Lenkwellenabschnitt
- 36: Ansatzgehäuse
- 36a: hydraulische Anschlüsse
- 38: Lenkventil
- 40: Schutzmanschette
- 42: Schraube
- 42a: Schraubenkopf
- 42b: Mutter
- 44: Schraubenloch
- 46: Schraubenloch
- 48: Schraubenloch
- 50: Befestigungsnocken

- 50a: Nockenwand
- 50b: Freiraum
- 50c: Knotenblech
- 50d: Untergurt
- 50e: fachwerkförmige Streben
- 50f: Steg
- 50g: Verstärkungssteg
- 50h: Brückenenden
- 52: Buchse
- 220: Trägerelement
- 221: Trägerelement
- 222: Trägerelement
- 223: Trägerelement
- a: Abmessung
- b: Abstand
- c: Breite
- h: Höhe
- E: Längsmittelebene

## Patentansprüche

1. Hilfsrahmen (10) für eine Vorderachse eines Personenkraftwagens zur Lagerung eines Lenkgetriebes (12), umfassend zwei parallel zueinander angeordnete Längsträger (20) und einen ersten und zweiten Tragsteg (22A, 24A), die parallel zueinander zwischen den beiden Längsträgern (20) angeordnet sind, wobei das Lenkgetriebe (12) zwischen den Tragstegen (22A, 24A) gelagert ist und durch mindestens eine Schraubverbindung lösbar mit den Tragstegen (22A, 24A) verbunden ist, wobei der zweite Tragsteg (24A) eine geringere Stabilität als der erste Tragsteg (22A)aufweist und der zweite Tragsteg (24A) durch die Schraubverbindung gegen den ersten Tragsteg (22A) biegbar ist, **dadurch gekennzeichnet, dass** die Schraubverbindung in Bezug auf ein Lenkgehäuse (28) des Lenkgetriebes (12) unterhalb des Lenkgehäuses (28) des Lenkgetriebes (12) angeordnet ist, sodass das Lenkgehäuse (28) des Lenkgetriebes (12) innerhalb eines von den beiden Tragstegen (22A, 24A) gebildeten Zwischenraums positioniert ist.

2. Hilfsrahmen nach Anspruch 1, **dadurch gekennzeichnet, dass** die Schraubverbindung eine Schraube (42) umfasst, die die Tragstege (22A, 24A) und das Lenkgehäuse (28) des Lenkgetriebes (12) in Schraubenlöcher (44, 46, 48) durchfasst.

3. Hilfsrahmen nach Anspruch 1 und 2, **dadurch gekennzeichnet, dass** der zweite Tragsteg (24A) in Bezug auf eine Längsrichtung (14) hinter dem ersten Tragsteg (22A) angeordnet ist.

4. Hilfsrahmen nach einem der vorhergehenden Ansprüche, **dadurch gekennzeichnet, dass** die Tragstege (22A, 24A) jeweils eine Höhenabmessung (h) aufweisen, die größer ist als ihre in die Längsrichtung (14) der Karosserie gerichtete Abmessung (c).

5. Hilfsrahmen nach einem der vorhergehenden Ansprüche, **dadurch gekennzeichnet, dass** der erste Tragsteg (22A) ein Profil, insbesondere ein Hohlprofil, vorzugsweise ein Rohrprofil ist.

6. Hilfsrahmen nach einem der vorhergehenden Ansprüche, **dadurch gekennzeichnet, dass** der zweite Tragsteg (24A) durch eine sich etwa vertikal erstreckende Platte oder ein Blech gebildet ist.

7. Hilfsrahmen nach einem der vorhergehenden Ansprüche, **dadurch gekennzeichnet, dass** die Tragstege (22A, 24A) sich von einem zum andern Längsträger (20) erstrecken und daran befestigt sind.

8. Hilfsrahmen nach einem der Ansprüche 1 bis 6, **dadurch gekennzeichnet, dass** erste Tragsteg (22a) sich von einem zum anderen Längsträger (20) erstreckt und der zweite Tragsteg (24A) durch zwei von den Längsträgern (20) aufeinander zu und/oder nach unten abstehende Tragstegstücke (24c) gebildet ist.

9. Hilfsrahmen nach Anspruch 8, **dadurch gekennzeichnet, dass** zwischen den Tragstegstücken (24c) lösbar ein Tragsteg (24B) angeordnet ist.

10. Hilfsrahmen nach Anspruch 8 und 9, **dadurch gekennzeichnet, dass** der lösbare Tragsteg (24B) in seinen Endbereichen-jeweils durch zwei oder mehr Schrauben (42) befestigt ist.

11. Hilfsrahmen nach den Ansprüchen 8 und 10, **dadurch gekennzeichnet, dass** der lösbare Tragsteg (24B) eine vorzugsweise randseitig offene Ausnehmung (24b) aufweist.

## Claims

1. Subframe (10) for a front axle of a passenger vehicle to support a vehicle steering mechanism (12), comprising two parallel longitudinal supports (20) and a first and second support web (22A, 24A) that are arranged parallel to each other between the two longitudinal supports (20), whereby the steering mechanism (12) is supported between the support webs (22A, 24A) and is releasably connected to the support webs (22A, 24A) by means of at least one bolt connection, whereby the second support web (24A) is less rigid than the first support web (22A) and the second support web (24A) can be bent by the bolt connection against the first support web (22a), **characterized in that** the bolt connection is disposed, in relation to a steering-gear housing (28), below the said steering-gear housing (28) of the steering mechanism such that the steering-gear housing (28) of the steering mechanism (12) is positioned in an intermediate space formed by the two support webs (22A, 24A).

2. Subframe in accordance with claim 1, **characterized in that** the bolt connection comprises a bolt (42) that passes through the support webs (22A, 24A) and the steering-gear housing (28) of the steering mechanism (12) and into bolt holes (44, 46, 48) thereby fixing the said support webs in position.

3. Subframe in accordance with claims 1 and 2, **characterized in that** the second support web (24A) is, in relation to a longitudinal direction (14), disposed behind the first support web (22A).

4. Subframe in accordance with one of the preceding claims, **characterized in that** the support webs (22A, 24A) in each case have a height (h) that is greater than their dimension (c) in the lengthwise direction (14) of the automobile body.

5. Subframe in accordance with one of the above claims, **characterized in that** the first support web (22A) is a shape, particularly a hollow form, preferably a tubular form.

6. Subframe in accordance with one of the above claims, **characterized in that** the second support web (24A) is formed by a plate or sheet extending roughly vertically.

7. Subframe in accordance with one of the above claims, **characterized in that** the support webs (22A, 24A) extend from the one longitudinal support (20) to the other and are fixed to these.

8. Subframe in accordance with one of the above claims, **characterized in that** the first support web (22a) extends from one longitudinal support (20) to another and **in that** the second support web (24A) is formed by two support web elements (24c) projecting towards each other and/or downwards.

9. Subframe in accordance with claim 8, **characterized in that** a support web (24B) is releasably disposed between the support web elements (24c).

10. Subframe in accordance with claims 8 or 9, **characterized in that** the releasable web (24B) is attached, at its end areas, by in each case two or more bolts (42).

11. Subframe in accordance with claims 8 and 10, **characterized in that** the releasable support web (24b) has a recess (24b) that is preferably open on the rim-side.

## Revendications

1. Faux-châssis (10) pour un essieu avant d'une voiture particulière servant au logement d'un mécanisme de direction (12), comportant deux longerons (20) disposés parallèlement l'un par rapport à l'autre et une première et deuxième traverse porteuse (22A, 24A) qui sont disposées parallèlement l'une à l'autre entre les deux longerons (20), le mécanisme de direction (12) étant logé entre les traverses porteuses (22A, 24A) et étant relié aux traverses porteuses (22A, 24A) de manière amovible par au moins un raccord vissé, la deuxième traverse porteuse (24A) présentant une stabilité inférieure à celle de la première traverse porteuse (22A), et la deuxième traverse porteuse (24A) pouvant être courbée contre la première traverse porteuse (22A) par le raccord vissé, **caractérisé en ce que** le raccord vissé est disposé par rapport au boîtier de direction (28) du mécanisme de direction (12) sous le boîtier de direction (28) du mécanisme de direction (12), de sorte que le boîtier de direction (28) du mécanisme de direction (12) est positionné à l'intérieur d'un espace intermédiaire formé par les deux traverses porteuses (22A, 24A).

2. Faux-châssis selon la revendication 1, **caractérisé en ce que** le raccord vissé comporte une vis (42), qui traverse les traverses porteuses (22A, 24A) et le boîtier de direction (28) du mécanisme de direction (12) dans des trous de vis (44, 46, 48).

3. Faux-châssis selon la revendication 1 et 2, **caractérisé en ce que** la deuxième traverse porteuse (24A) est disposée derrière la première traverse porteuse (22A) par rapport à un sens longitudinal (14).

4. Faux-châssis selon l'une quelconque des revendications précédentes, **caractérisé en ce que** les traverses porteuses (22A, 24A), présentent respectivement une dimension de hauteur (h), qui est supérieure à leur dimension (c) dirigée dans le sens longitudinal (14) de la carrosserie.

5. Faux-châssis selon l'une quelconque des revendications précédentes, **caractérisé en ce que** la première traverse porteuse (22A) est un profil, en particulier un profil creux, de préférence un profil tubulaire.

6. Faux-châssis selon l'une quelconque des revendications précédentes, **caractérisé en ce que** la deuxième traverse porteuse (24A) est formée par une plaque s'étendant de façon à peu près verticale ou une tôle.

7. Faux-châssis selon l'une quelconque des revendications précédentes, **caractérisé en ce que** les traverses porteuses (22A, 24A) s'étendent d'un longeron (20) à l'autre et y sont fixées.

8. Faux-châssis selon l'une quelconque des revendications 1 à 6, **caractérisé en ce que** la première traverse porteuse (22a) s'étend d'un longeron (20) à l'autre et la deuxième traverse porteuse (24A) est formée par deux éléments de traverse porteuse (24c) s'approchant des longerons (20) et/ou s'en éloignant vers le bas.

9. Faux-châssis selon la revendication 8, **caractérisé en ce qu'**une traverse porteuse (24B) est disposée de manière amovible entre les éléments de traverse porteuse (24c).

10. Faux-châssis selon la revendication 8 et 9, **caractérisé en ce que** la traverse porteuse (24B) amovible est fixée dans ses zones d'extrémité respectivement par deux ou plusieurs vis (42).

11. Faux-châssis selon les revendications 8 et 10, **caractérisé en ce que** la traverse porteuse (24B) amovible présente un évidement (24b) ouvert de préférence côté bord.
